**Europäisches Patentamt**

**European Patent Office**

**Office européen des brevets**

(11) Veröffentlichungsnummer: **0 291 789 B1**

# EUROPÄISCHE PATENTSCHRIFT

(45) Veröffentlichungstag der Patentschrift: 25.09.91

(51) Int. Cl.⁵: **H04Q 11/04**, H04Q 3/545

(21) Anmeldenummer: 88107326.6

(22) Anmeldetag: 06.05.88

(54) Schaltungsanordnung für zentralgesteuerte Zeitmultiplex-Fernmeldevermittlungsanlagen, insbesondere PCM-Fernsprechvermittlungsanlagen, mit an ein Koppelfeld angeschlossenen Anschlussgruppen.

(30) Priorität: 22.05.87 DE 3717269

(43) Veröffentlichungstag der Anmeldung:
23.11.88 Patentblatt 88/47

(45) Bekanntmachung des Hinweises auf die Patenterteilung:
25.09.91 Patentblatt 91/39

(84) Benannte Vertragsstaaten:
AT BE CH DE ES FR GB GR IT LI NL SE

(56) Entgegenhaltungen:
WO-A-83/01549
FR-A- 2 353 193
LU-A- 86 734

NATIONAL TELECOMMUNICATIONS CONFE-RENCE, Band 2, November/Dezember 1981, Seiten 1-5, New Orleans, US; D.L. JACKSON et al.: "GTD-5 EAX RSU survivability"

IEEE GLOBAL TELECOMMUNICATIONS CON-FERENCE, New Orleans, 2.-5. Dezember 1985, Band 2, Seiten 899-902, IEEE; G. CHAHIL: "System initialization in a distributed digital switch"

INTERNATIONAL SWITCHING SYMPOSIUM, 7.-11. Mai 1984, Florence, Band 1, Seiten 1-6; A. MOLINARI et al.: "MC 240 - A remote multiplexer-concentrator for local applica-tions"

IEEE INTERNATIONAL CONFERENCE ON COMMUNICATIONS, 22.-25. Juni 1986, Toron-to, Seiten 1100-1104, IEEE; E. OLSSON et al.: "The application of remote switching units. Experiences and future requirements"

(73) Patentinhaber: **Siemens Aktiengesellschaft**
**Wittelsbacherplatz 2**
**W-8000 München 2(DE)**

(72) Erfinder: **Seeger, Helmut, Dipl.-Ing.**
**Stobäusstrasse 42**
**W-8190 Wolfrathausen(DE)**
Erfinder: **Leichum, Axel, Dipl.-Ing.**
**Konrad -Celtis-Strasse 74**
**W-8000 München 70(DE)**
Erfinder: **Maher, Anthony, Dipl.-Ing.**
**Höglwörterstrasse 266**
**W-8000 München 70(DE)**

## Beschreibung

Durch die Zeitschrift "telcom report" Beiheft 1981, insbesondere Seiten 7 ff., 19 ff. und 49 ff. ist bereits eine Schaltungsanordnung für zentralgesteuerte Fernmeldevermittlungsanlagen, insbesondere PCM-Zeitmultiplex-Fernsprechvermittlungsanlage, bekannt, in denen ein der Verbindungsdurchschaltung dienendes zentrales Koppelfeld samt einem unter anderem dessen Steuerung sowie einer hierfür erforderlichen Schaltkennzeichenverarbeitung dienenden programmgesteuerten zentralen Prozessor zur Ersatzschaltemöglichkeit (stand-by-Betrieb) zweifach vorgesehen ist, und in denen eine Mehrzahl von dezentralen Anschlußgruppen mit je einem Teilkoppelfeld zum außenseitigen Anschluß von Verbindungs- und/oder Teilnehmerleitungen und mit einer dezentralen programmierbaren Steuereinrichtung zur Schaltkennzeichenaufnahme von diesen Leitungen, zur Schaltkennzeichenvorverarbeitung und -weiterleitung an den zentralen Prozessor und zur Schaltkennzeichenaussendung auf diese Leitungen ausgestattet ist, und in denen in jeder dieser Anschlußgruppen das jeweilige Teilkoppelfeld innenseitig über zwei Gruppen von Linkleitungen gruppenweise getrennt mit Koppelfeldanschlüssen einerseits des einen und andererseits des anderen der beiden parallel vorgesehenen Koppelfelder verbunden ist, und in denen für einen der obigen Schaltkennzeichenbehandlung dienenden sowie der Übertragung von Programm- und Vermittlungs-Software dienenden Datenaustausch zwischen den dezentralen Steuereinrichtungen einerseits und dem jeweils betriebsbereiten bzw. betriebsvorbereitenden Prozessor andererseits Datenverbindungen jeweils pro dezentrale Steuereinrichtung von jenem über das ihm zugeordnete Koppelfeld zu den dezentralen Steuereinrichtungen in betriebsbereiten Zustand gebracht bzw. in ihm gehalten werden, wofür eine mit dem zentralen Prozessor verbundene Eingabe-Ausgabe-Einrichtung vorgesehen ist, die mit einer Mehrzahl und zwar pro Datenverbindung vorgesehenen Link-Anschlüssen einzeln wie die Link-Leitungen mit Koppelfeldanschlüssen fest verbunden ist.

In der zuvor angegebenen Zeitschrift sind auf Seite 19 ff u.a. die Teilkoppelfelder der peripheren Anschlußgruppen dargestellt und beschrieben (GS). Innenseitig sind sie mit dem gedoppelten zentralen Koppelfeld ("Koppelnetz") verbunden und außenseitig über Anschlußeinheiten (LTU/DIU) mit Analogleitungen bzw. mit Kanälen von Digitalübertragungssystemen. Diese Leitungen bzw. Kanäle führen (soweit sie nicht Teilnehmerleitungen bzw. für Teilnehmeranschlüsse vorgesehene Kanäle sind) zu anderen Vermittlungsstellen und sind zur Verbindungsherstellung verbindungsindividuell in bekannter Weise belegbar. Auf Seite 8 sind die über das gedoppelte Koppelfeld in betriebsbereitem Zustand ständig durchgeschalteten Steuerkanäle beschrieben. Das zentrale Koppelfeld und der zentrale Prozessor sind also aus Sicherheitsgründen gedoppelt. Diese Doppelung fällt im Blick auf die Gesamtheit einer derartigen Vermittlungsstelle nicht besonders ins Gewicht, weil sie nur wenige zentrale Bestandteile betrifft. Die peripheren Anschlußgruppen und die zu ihnen gehörenden Bestandteile, wie zum Beispiel dezentrales Steuerwerk und Teilkoppelfeld, die in größerer Anzahl und folglich in vergleichsweise relativ großem Umfang vorhanden sind, sind deshalb nicht gedoppelt. Bei einem Ausfall einer Anschlußgruppe (zum Beispiel ihres Teilkoppelfeldes oder ihrer dezentralen Steuereinrichtung oder ihrer Stromversorgung) ist hiervon nur ein relativ so kleiner Teil der Gesamtheit der angeschlossenen Teilnehmerleitungen und Verbindungsleitungen betroffen, daß eine vorübergehende Betriebsunterbrechung, die sich also auf diese beschränkt, hingenommen wird. Bei den in der genannten Zeitschrift erwähnten Steuerkanälen handelt es sich um die eingangs genannten Datenverbindungen, die für den sowohl der Verarbeitung von in den Anschlußgruppen eintreffenden Informationen im zentralen Prozessor, als auch der Übertragung von Programm- und Vermittlungs-Software vom zentralen Prozessor an die dezentralen Steuerwerke dienenden Datenaustausch vorhanden sein müssen, welcher also zwischen den dezentralen Steuereinrichtungen einerseits und dem zentralen Prozessor andererseits abgewickelt wird, und die hierfür in betriebsbereiten Zustand gebracht bzw. ständig in ihm gehalten werden.

In Vermittlungsanlagen der eingangs angegebenen Art ist das ganz allgemein bekannte Prinzip der Ersatzschaltung realisiert. Eine Ersatzschaltemaßnahme wird jeweils erforderlich, wenn der mit einem der beiden parallelen Koppelfelder und einem der beiden zentralen Prozessoren, das heißt dem betreffenden zentralen Koppelfeld zugeordneten zentralen Prozessor, laufende Vermittlungsbetrieb anstatt mit diesem zentralen Koppelfeld und diesem zentralen Prozessor mit dem jeweils anderen zentralen Koppelfeld und dem jeweils anderen zentralen Prozessor fortgeführt werden muß.

Solche Ersatzschaltefälle werden insbesondere bei Eintreten von Störungen oder Auftreten von Fehlern, also meistens unvorhersehbar erforderlich. Fehler und Störungen können so gravierend sein, daß eine unverzügliche Ersatzschaltung notwendig ist. Häufig jedoch betreffen solche Fehler und Störungen nur Teile der gesamten Vermittlungsanlage, zum Beispiel nur einen Teil des zentralen Koppelfeldes oder nur bestimmte Funktionen in demselben oder im zentralen Prozessor oder sie treten sporadisch auf. In solchen Fällen, das heißt den meisten notwendig werdenden Ersatzschaltefällen, läßt sich die betreffende Ersatzschaltemaßnahme auch noch kurzzeitig hinauszuschieben.

Im Zusammenhang mit Ersatzschaltemaßnahmen wurde bereits für eine Schaltungsanordnung der eingangs angegebenen Art vorgeschlagen, daß jeweils zwei Anschlußgruppen paarweise einander zugeordnet sind, daß in jeder derselben zum außenseitigen Anschluß von Teilnehmer- und/oder Verbindungs-Leitungen dienenden und innerhalb der jeweiligen Anschlußgruppe im Normalbetrieb mit ihrem Teilkoppelfeld verbundene Anschlußeinheiten, zum Beispiel Teilnehmeranschlußschaltungen, Mehrfachteilnehmeranschlußschaltungen, Verbindungsleitungs(-mehrfach-)abschlußschaltungen und dergleichen, im Notbetrieb teilweise umschaltbar sind, wodurch die Anschlußeinheiten jeweils einer ersten dieser beiden Anschlußgruppen notbetriebsbedingt zusätzlich an das Teilkoppelfeld der jeweils anderen, also einer jeweils zweiten Anschlußgruppe angeschaltet werden, und wodurch für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird, und daß eine Ersatzschaltung eines der beiden zentralen Prozessoren noch während zunächst weiterlaufendem Betrieb durch den anderen der beiden Prozessoren dadurch vorbereitet wird, daß sowohl sämtliche paarweise einander zugeordneten Anschlußgruppen vom Normalbetrieb in den Notbetrieb übergeführt werden, als auch der andere zentrale Prozessor Datenverbindungen über das ihm zugeordnete zentrale Koppelfeld zu den dezentralen Steuereinrichtungen aller ersten Anschlußgruppen in betriebsbereiten Zustand bringt und anschließend nacheinander an die dezentralen Steuereinrichtungen die für ihren Betriebsbeginn erforderliche Programm- und Vermittlungs-Software zur Speicherung in ihnen überträgt. Eine in dieser Weise ausgebildete Schaltungsanordnung schafft die Möglichkeit, unter Fortführung des Vermittlungsbetriebes bei eingeschränkter Verkehrsleistung hinsichtlich der Leistung der Verbindungsherstellungsfunktionen die Dauer der in Zusammenhang mit einer Ersatzschaltung von zentralem Prozessor und zentralem Koppelfeld bedingten völligen Betriebsunterbrechung ganz wesentlich zu verkürzen. Die Beschränkung der Verkehrsleistung besteht deshalb nur während einer Übergangszeit.

Die Erfindung bezieht sich nun auf eine ähnliche Schaltungsanordnung, und zwar auf eine Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld samt einem unter anderem dessen Steuerung sowie einer hierfür erforderlichen Schaltkennzeichenverarbeitung dienenden zentralen Prozessor zur Ersatzschaltemöglichkeit (stand-by-Betrieb) zweifach vorgesehen ist, und in denen eine Mehrzahl von dezentralen Anschlußgruppen mit je einem Teilkoppelfeld zum außenseitigen Anschluß von Verbindungs- und/oder Teilnehmerleitungen und mit je einer dezentralen Steuereinrichtung zur Schaltkennzeichenaufnahme von diesen Leitungen, zur Schaltkennzeichenvorverarbeitung sowie zur Schaltkennzeichenweiterleitung an den zentralen Prozessor und zur Schaltkennzeichenaussendung auf diese Leitungen ausgestattet ist, und in denen in jeder dieser Anschlußgruppen das jeweilige Teilkoppelfeld innenseitig über zwei Gruppen von Linkleitungen gruppenweise getrennt mit Koppelfeldanschlüssen einerseits des einen und andererseits des anderen der beiden parallel vorgesehenen zentralen Koppelfelder verbunden ist, und in denen für einen der obigen Schaltkennzeichenbehandlung dienenden Datenaustausch zwischen den dezentralen Steuereinrichtungen einerseits und dem jeweils betriebsbereiten Prozessor andererseits Datenverbindungen jeweils pro dezentrale Steuereinrichtung von jenem über das ihm zugeordnete Koppelfeld zu den dezentralen Steuereinrichtungen in betriebsbereiten Zustand gebracht bzw. in ihm gehalten werden, und in denen die Anschlußgruppen jeweils zu zweit einander paarweise zugeordnet sind, und in denen innerhalb jeder derselben zum außenseitigen Anschluß von Teilnehmer-und/oder Verbindungs-Leitungen dienende und innerhalb der jeweiligen Anschlußgruppe primär mit ihrem Teilkoppelfeld verbundene Anschlußeinheiten, z.B. Teilnehmeranschlußschaltungen, Mehrfachteilnehmeranschlußschaltungen, Verbindungsleitungs(-mehrfach-)abschlußschaltungen und dergleichen, in einer Weise umschaltbar sind, durch die die Anschlußeinheiten jeweils einer ersten dieser beiden Anschlußgruppen zusätzlich an das Teilkoppelfeld der jeweils anderen, also einer jeweils zweiten Anschlußgruppe angeschaltet werden, woraufhin für die über die umgeschalteten Anschlußeinheiten durchzuschaltenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird.

Bei einer derartigen Schaltungsanordnung besteht im Zusammenhang mit dem erwähnten Vorgang der Umschaltung das Problem, daß bei diesem Vorgang in Vermittlungsanlagen der bisherigen Art die bestehenden Verbindungen unterbrochen werden. Sie müssen also von den Teilnehmern neu aufgebaut werden, was nicht nur für diese störend und unter Umständen mühsam ist, z. B. weil die ursprünglich gewählte Teilnehmerrufnummer neu herausgesucht werden muß, sondern es erwächst den Teilnehmern außerdem eine zusätzliche Gebührenbelastung, insbesondere bei Ortsgesprächen, weil die ursprünglichen Verbindungen verloren sind und neue Verbindungen aufgebaut werden müssen. Zudem entsteht das Problem, daß der Wiederaufbau der in Zusammenhang mit dem Vorgang der Umschaltung unterbrochenen Verbindungen, die hierfür hauptsächlich in Anspruch genommenen Organe, wie der zentrale Prozessor und die dezentralen Steuerwerke vorübergehend überdurchschnittlich stark mit Informationsverarbeitungsvorgängen belastet werden.

Für die Erfindung besteht die Aufgabe, für eine Schaltungsanordnung der zuletzt angegebenen Art geeignete Maßnahmen anzugeben, mit deren Hilfe bei dem erwähnten Vorgang der Umschaltung die bestehenden Verbindungen nicht unterbrochen und neu aufgebaut zu werden brauchen.

Die Erfindung löst die gestellt Aufgabe dadurch, daß eine durch die Umschaltung innerhalb jedes dieser Paare von einander zugeordneten Anschlußgruppen zu bewirkende Ersatzschaltung eines der beiden zentralen Prozessoren samt zugeordnetem Zentralkoppelfeld durch den anderen der beiden Prozessoren ebenfalls samt zugeordnetem anderem Zentralkoppelfeld noch während zunächst weiterlaufendem Betrieb des ersteren mit Hilfe erstens von Datenverbindungen, die von dem anderen zentralen Prozessor über das ihm zugeordnete Zentral-Koppelfeld zu den dezentralen Steuereinrichtungen aller ersten Anschlußgruppen in betriebsbereiten Zustand gebracht werden, und zweitens von Verbindungsdaten, die bezüglich aller über das noch in Betrieb befindliche Zentralkoppelfeld und über die Teilkoppelfelder der jeweils zweiten Anschlußgruppen bestehender individueller Verbindungen angeben, welcher außenseitige Teilkoppelfeldanschluß mit welchem seinesgleichen oder welche beiden außenseitigen Teilkoppelfeldanschlüsse mit welchen beiden Zentralkoppelfeldanschlüssen und welcher Zentralkoppelfeldanschluß mit seinesgleichen verbunden ist, und die in den dezentralen Steuereinrichtungen der jeweils zweiten Anschlußgruppen gespeichert sind, und die pro Anschlußgruppen-Paar aufgrund eines von der dezentralen Steuereinrichtung der jeweils ersten Anschlußgruppe an die Steuereinrichtung der jeweils zweiten Anschlußgruppe abgegebenen Anforderungssignales über dezentrale, den Anschlußgruppen-Paaren jeweils individuelle Übertragungswege jeweils von der letztgenannten Steuereinrichtung an die erstgenannte Steuereinrichtung übertragen und hier gespeichert werden, und die anschließend aus jeder von diesen durch den anderen zentralen Prozessor abgerufen werden, und drittens von Verbindungen, die letzterer anhand dieser durch ihn abgerufenen Verbindungsdaten über sein Zentralkopppelfeld und die Teilkoppelfelder der jeweils ersten Anschlußgruppen aufbaut, vorbereitet wird, und daß die Umschaltung aller Anschlußeinheiten von den Teilkoppelfeldern aller ersten Anschlußgruppen zu denen aller zweiten Anschlußgruppen in Abhängigkeit von der Durchführung der letzteren Verbindungsaufbauvorgänge erfolgt.

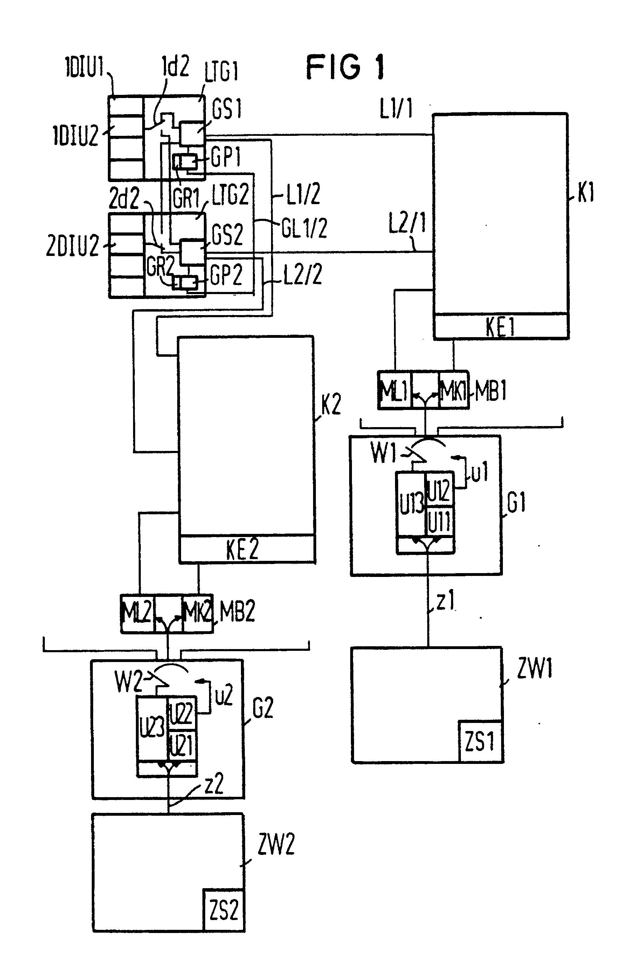

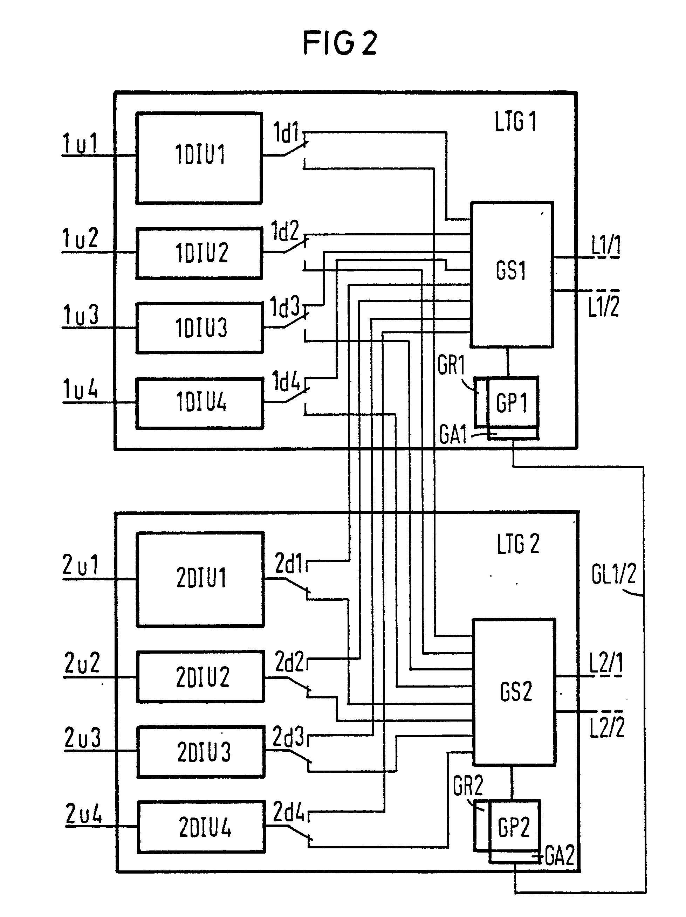

In den Zeichnungen Figur 1 und Figur 2 ist ein Ausführungsbeispiel der Erfindung nur in wesentlich zu ihrem Verständnis beitragenden Bestandteilen dargestellt, worauf dieselbe jedoch keineswegs beschränkt ist. Dabei zeigt Figur 1 auszugsweise eine Fernsprechvermittlungsanlage der Art, wie sie auch in der deutschen Patentschrift 3 128 365 beschrieben ist. Figur 2 zeigt weitere erfindungswesentliche Details.

Bevor die Beschreibung speziell auf die erfindungswesentlichen Besonderheiten des Ausführungsbeispieles eingeht, erläutert sie die Arbeitsweise einer neuzeitlichen Fernsprechvermittlungsanlage, in der die Erfindung angewendet ist. Dabei geht die Beschreibung von bekannten Zeitmultiplex-Fernsprechvermittlungsanlagen mit PCM-Technik aus, wie sie in der Fachliteratur vielfältig und detailliert beschrieben sind, beispielsweise in der weiter oben genannten zeitschrift "telcom report". Hierin sind unter anderem auf Seite 19 ff periphere Anschlußgruppen in diesem Fernsprechvermittlungssystem beschrieben. Wie es ähnlich auch in Bild 1 auf seite 8 der genannten Zeitschrift dargestellt ist, sind Koppelfeld (SN) und zentraler Prozessor (CP) gedoppelt vorgesehen, in Figur 1 mit "K1" und "K2" und mit "ZW1" und "ZW2" bezeichnet.

In den Zeichnungen sind zwei Anschlußgruppen LTG1 und LTG2 auszugsweise dargestellt, die zu einer zentralgesteuerten Zeitmultiplex-Fernsprechvermittlungsanlage in PCM-Technik gemäß Figur 1 gehören. Sie sind in an sich bekannter Weise über Zeitmultiplex-Leitungen L1/1 L2/1, L1/2 und L2/2 an das mehrstufige, Zeitmultiplex-Eingänge und Zeitmultiplex-Ausgänge aufweisende zentrale und gedoppelte Koppelfeld K1/K2 gemäß Figur 1 angeschlossen. Dabei ist jeder dieser Anschlüsse entsprechend dieser Dopplung des Koppelfeldes ein zweifacher. Jede dieser beiden pro Anschlußgruppe, zum Beispiel LTG1, vorgesehenen Zeitmultiplex-Leitungen weist für jede der beiden Übertragungsrichtungen je eine größere Anzahl von zum Beispiel dreißig Kanälen auf und ist dementsprechend - wie auch in der weiter oben genannten Patentschrift im Detail dargestellt und beschrieben - sowohl an je einen Zeitmultiplex-Eingang als auch an je einen Zeitmultiplex-Ausgang jedes dieser beiden Koppelfelder angeschlossen.

Ferner ist gemäß Figur 1 zu jedem der beiden parallelen Koppelfelder K1/K2 je ein zentraler Prozessor ZW1 bzw. ZW2 vorgesehen, mit dessen Hilfe die gesamten Steuerungsvorgänge für die Verbindungsherstellung über das jeweilige zentrale Koppelfeld K1 bzw. K2 in an sich bekannter Weise mittels einer Puffereinrichtung MB1/MK1 bzw. MB2/MK2 und einer Koppelfeldeinstelleinrichtung KE1 bzw. KE2 bewerkstelligt werden, was im einzelnen in dem genannten Patent beschrieben ist. Hierzu werden Informationen durch den zentralen Prozessor ZW1 bzw. ZW2 (zentrales Steuerwerk) von den Anschlußgruppen, zum Beispiel LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Von den beiden zentralen Koppelfeldern K1 und K2 und den beiden zentralen Prozessoren ist jeweils ein Koppelfeld zum Beispiel K1 und ein zentraler Prozessor, zum Beispiel ZW1, in Betrieb, während das andere Koppelfeld und der andere Prozessor für den Fall einer notwendig werdenden Ersatzschaltung zur Verfügung stehen. Zur Vereinfachung der weiteren allgemeinen Beschreibung ist deshalb vorläufig immer nur vom zentralen Koppelfeld K1 und vom zentralen Prozessor ZW1 die Rede.

Den vom zentralen Prozessor ZW1 an die genannten Anschlußgruppen zu übertragenden Informationen, die auch Abrufbefehle zum Abruf von von den Anschlußgruppen bzw. von den Anschlußeinheiten zum zentralen Steuerwerk zu übertragenden Informationen, zum Beispiel Wahlinformationen, sein können, ist jeweils eine die betreffende Anschlußeinheit bezeichnende Adresse vorangestellt. Ist nun eine Anschlußeinheit vom zentralen Prozessor ZW1 anzusteuern zwecks Übertragung einer Information (gegebenenfalls Abrufbefehl) von diesem an jene, so überträgt dasselbe die Adresse und die Information sukzessive nacheinander zunächst zu einer Eingabe-Ausgabe-Einrichtung G1 (in "telcom report": IOP). Diese nimmt beide zunächst auf und speichert sie.

Wie in der zuvor genannten Patentschrift erläutert ist, bestehen zwischen der Eingabe-Ausgabe-Einrichtung G1 einerseits und jeder der Anschlußgruppen, und zwar ihren dezentralen Steuereinrichtungn, zum Beispiel GP1, GP2, andererseits über die Zeitmultiplex-Leitungen L1/1 bzw. L2/1, und zwar über jeweils einen Kanal pro Zeitmultiplexleitung, sowie über das Koppelfeld K1 und über Puffereinrichtungen MB1/ML1 Datenverbindungen. Hat nun die Eingabe-Ausgabeeinrichtung eine Information nebst Adresse vom zentralen Steuerwerk ZW1 über den Weg z1 empfangen, so führt sie von dieser Adresse einen ersten Adressenteil unter anderem einem Adressen-Signalkanal-Umsetzer U1/U2 zu. Dieser erste Adressenteil entspricht der jeweiligen Anschlußgruppe und damit der ihr zugeordneten Datenverbindung über Puffereinrichtung MB1 und Koppelfeld K1. Der genannte Umsetzer U11/U12 gibt eine dem ersten Adressenteil entsprechende Steuerinformation ab, die er über den Steuerweg u1 einem elektronischen Wähler W1 zuführt, welcher dadurch auf den betreffenden Signalkanal (über MB1 verlaufend) eingestellt wird. Dadurch ist die Eingabe-Ausgabe-Einrichtung G1 über diesen mit der dezentralen Steuereinrichtung, zum Beispiel GP1, der betreffenden Anschlußgruppe, zum Beispiel LTG1, verbunden und überträgt nun zu dieser die Information nebst vollständiger Adresse, das heißt einschließlich erstem Adressenteil.

Es ist eine größere Anzahl von einem Anschluß von verschiedenen Verkehrsrichtungen zugeordneten Zeitmultiplex-Verbindungsleitungen dienenden Anschlußgruppen vorgesehen, von denen die beiden Anschlußgruppen LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital-Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bekanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist im einzelnen beschrieben, welchem Zweck die genannten Anschlußeinheiten dienen. Eine Anschlußeinheit ist bei Analog-Teilnehmerleitungen bzw. Analog-Verbindungsleitungen jeweils für eine Mehrzahl von Leitungen vorgesehen. Anschlußeinheiten für zeitmultiplex betriebene Übertragungs-Systeme, die jeweils eine größere Anzahl von Kanalpaaren umfassen (siehe oben), sind so aufgebaut, daß an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe verbunden und über diese mit Kanälen des der betreffenden Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme, von denen jedes einer anderen Verkehrsrichtung zugeordnet sein kann, die aber auch zu zweit oder zu mehreren jeweils gemeinsam ein und derselben Verkehrsrichtung zugeordnet sein können) insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme 1u1 bis 1u4 in Figur 2 etwa die gleiche Anzahl von Kanalpaaren aufweisen, wie die Zeitmultiplex-Leitung L1/1.

Da es nun vorkommen kann, daß die dezentralen Steuereinrichtungen (GP), Teilkoppelfelder (GS) oder Zeitmultiplex-Leitungen störungsbedingt ausfallen können, was also auch für die Zeitmultiplex-Leitungen L1/1, L1/2, L2/1 und L2/2 zutrifft, würde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungstechnik bei den vorgegebenen Werten und Daten bezüglich der Anzahlen von Kanalpaaren pro Verkehrsrichtung häufig nur ein einziges Übertragungssystem pro Verkehrsrichtung vorgesehen zu werden braucht, würde bei Ausfall einer dezentralen Steuereinrichtung, eines Teilkoppelfeldes oder der eine Anschlußgruppe mit dem zentralen Koppelfeld verbindenden Zeitmultiplex-Leitung auch das betreffende einzige Übertragungssystem pro Verkehrsrichtung ausfallen. Gleiches gilt bei Ausfall der dezentralen Steuereinrichtung zum Beispiel GP1, einer Anschlußgruppe, zum Beispiel LTG1.

Eine solche unvorteilhafte Möglichkeit wird durch die Maßnahme ausgeschlossen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1DIU1 bis 1DIU4 und 2DIU1 bis 2DIU4 jeder dieser beiden Anschlußgruppen LTG1 und LTG2, die im Normalbetrieb mit der Zeitmultiplex-Koppeleinrichtung Gs1 bzw. Gs2 ihrer eigenen Anschlußgruppe LTG1 bzw. LTG2 verbunden sind, im Notbetrieb einer dieser beiden Anschlußgruppen, zum Beispiel LTG2, zu der ein Teilkoppelfeld bildenden Zeitmultiplex-Koppeleinrichtung, zum Beispiel GS1, der jeweils anderen Anschlußgruppe, zum Beispiel LTG1 umschaltbar sind. Hierzu sind Umschalter 1d1 bis 1d4 und 2d1 bis 2d4 vorgesehen. Diese sind in der Zeichnung in der dem Normalbetrieb entsprehenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht, wenn bei einer Anschlußgruppe störungsbedingt ein Ausfall der oben angegebenen Art eintritt.

Werden nun die Umschalter 2d1 bis 2d4 bei einem Übergang von der Normalbetriebs-Situation in die Notbetriebs-Situation störungsbedingt aus ihrer dargestellten Ruhelage in ihre Arbeitslage umgeschaltet, so sind von diesem Zeitpunkt an die Anschlußeinheiten 2DIU bis 2DIU4 der Anschlußgruppe LTG2 mit der Zeitmultiplex-Koppeleinrichtung GS1 der Anschlußgruppe LTG1 verbunden. Infolgedessen können bei einem Ausfall der Zeitmultiplex-Leitung L2 die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, das heißt, sie können also in vermittlungstechnischer Hinsicht ein gemeinsames Bündel von Kanalpaaren bilden.

Wie bereits weiter oben erwähnt wurde, werden die Verbindungen über das zentrale Koppelfeld K1 hergestellt. Hierbei wirkt der zentrale Prozessor ZW1 mit. In dem zentralen Prozessor sind die Anschlußgruppen, die in ihnen jeweils enthaltenen Anschlußeinheiten sowie die über jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also verwendbar nach betriebsgemäßem jeweiligem Bedarf. Es ist also vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, z.B. LTG2, bzw. deren Gruppensteuereinrichtung, z.B. GP2, die beim Normalbetrieb derselben im zentralen Prozessor gesperrten Notbetriebs-Adressen der betreffenden Anschlußeinheiten, z.B. 2DIU1 bis 2DIU4, entsperrt und stattdessen die Normalbtriebs-Adressen dieser Anschlußeinheiten gesperrt werden. Auf nicht im einzelnen dargestellte Weise wird also dem Zentralen Prozessor gemeldet, daß eine Anschlußgruppe, z.B. LTG2, vom Normalbetrieb in den Notbetrieb übergeht. Aufgrund dieser Meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

In der gleichen Weise, wie die zuvor beschriebene Umschaltung der Verbindungswege (die gesamten Kanalpaare) mittels der Umschalter 2d1 bis 2d4 erfolgt, wird auch die zentrale Taktversorgung der betreffenden Anschlußeinheiten beim Übergang vom Normalbetrieb in den Notbetrieb von der zugeordneten Anschlußgruppe zu der jeweils anderen Anschlußgruppe umgeschaltet. Dadurch ist sichergestellt, daß die Anschlußeinheiten mit derjenigen Anschlußgruppe taktsynchron laufen, zu der hin die jeweilige Umschaltung erfolgt ist. In der gleichen Weise kann auch die Versorgung mit den erforderlichen Betriebsspannungen für die betreffenden Anschlußeinheiten von derjenigen Anschlußgruppe, die vom Normalbetrieb in den Notbetrieb übergegangen ist, zu der jeweils anderen Anschlußgruppe hin umgeschaltet werden. Günstiger noch ist es, die Einrichtungen für die Betriebsspannungsversorgung redundant, das heißt ausfallsicher auszuführen, zum Beispiel zweifach für alle Anschlußeinheiten der beiden Anschlußgruppen.

Teilweise abweichend von dem zuvor Beschriebenen kann auch vorgesehen sein, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die je-weilige Anschlußeinheit innerhalb jener bezeichnen-den zweiten Adressenteil umfaßt. Dies wurde bereits erwähnt. Mit Hilfe desersten Adressenteils der Adresse der betreffenden Anschlußeinheit wird jeweils diejenige Anschlußgruppe angesteuert, zu der die betreffende Anschlußeinheit gehört. Die Ansteuerung der Anschlußgruppe erfolgt in der angegebenen Weise dadurch, daß anhand des ersten Adressenteils eine Einstellinformation im Adressen-Signal-Umsetzer U11/U12 gebildet wird, die über den Steuerweg u dem elektronischen Wähler W1 zugeführt wird, wodurch die Eingabe-Ausgabe-Einrichtung G1 über die Puffereinrichtung MB1 mit demjenigen über das Koppelfeld K1 im durchgeschalteten Zustand bereitgehaltenen Signalkanal verbunden wird, der über eine Zeitmultiplexleitung, zum Beispiel L1/1 zu der betreffenden Anschlußgruppe hin führt. Es ist also ein Adressen-Signalkanal-Umsetzer G1 im zentralen Prozessor vorgesehen, der bei Vorliegen einer Information für eine Anschlußeinheit aus der der Information beigefügten Adresse anhand deren erstem Adressenteil eine von dem Prozessor zur Ansteuerung des be-treffenden Signalkanals verwendete Signalkanal-nummer abgibt. Diese Signalkanalnummer bezeich-net also den zuvor genannten betreffenden Signalkanal. Diese Signalkanalnummer dient als Einstellinformation, die über den Signalweg u1 zu dem genannten elektronischen Wähler W1 hin zu dessen Einstellung auf den betreffenden Signalkanal weitergegeben wird. Dieser elektronische Wähler kann in jeder beliebigen Weise auch als Koppler ausgebildet sein. Der Adressen-Signalkanal-Umsetzer G1 im zentralen Prozessor ZW1 kann selbstverständlich auch räumlich gesondert von diesem (wie in Figur 1 dargestellt) vorgesehen sein, kann aber auch Bestandteil desselben sein. Er dient im übrigen in an sich bekannter Weise der Abwicklung der Eingabeprozeduren und Ausgabeprozeduren des zentralen Prozessors ZW1.

Wie bereits ausgeführt wurde, wird bei jeweiliger Ansteuerung eines Signalkanals zwecks Ansteuerung der betreffenden Anschlußgruppe die genannte Adresse sowie die Information über diesen Signalkanal übertragen. Adresse und Information werden über den Signalkanal zu der betreffenden Anschlußgruppe und hier über die erwähnte Zeitmultiplex-Koppeleinrichtung, zum Beispiel GS1, zunächst zu der betreffenden dezentralen Steuereinrichtung, zum Beispiel GP1, übertragen. Diese erkennt anhand der Adresse, und zwar insbesondere anhand des darin enthaltenen zweiten Adressenteils, zu welcher der Anschlußeinheiten die betreffende Information weiterzuleiten ist.

In dem zuvor beschriebenen Zusammenhang sei zunächst davon ausgegangen, daß der weiter oben bereits erwähnte Adressenteil diejenige Anschlußgruppe bezeichnet, zu der hin Adresse und Information in der zuvor beschriebenen Weise übertragen wurden. Der zweite Adressenteil gibt nun an, welche der Anschlußeinheiten innerhalb der betreffenden Anschlußgruppe, zum Beispiel LTG1, diejenige ist, zu welcher hin die betreffende Information weiterzuleiten ist. Es sei angenommen, daß dies die Anschlußeinheit 1DIU2 sei. Weiterhin sei angenommen, daß sich die betreffende Anschlußgruppe, zum Beispiel LTG1 im Normalbetriebszustand befindet. In diesem Falle ist also der Umschalter 1d2 in der in Figur 1 dargestellten Ruhelage. Die Anschlußeinheit 1DIU2 ist folglich in diesem Betriebszustand über die Ruheseite des Umschalters 1d2 mit der Zeitmultiplex-Koppeleinrichtung GS1 der Anschlußgruppe LTG1 verbunden.

Wie zuvor erläutert, hat die dezentrale Steuereinrichtung GP1 mit der Information, die für die Anschlußeinheit 1DIU2 bestimmt ist, auch die Adresse empfangen und zwischengespeichert, die aus einem ersten, die Anschlußgruppe LTG1 bezeichnenden Adressenteil und einem zweiten, die Anschlußeinheit 1DIU2 in ihr bezeichnenden zweiten Adressenteil umfaßt. Anhand des ersten Adressenteils erkennt die dezentrale Steuereinrichtung GP1, daß die betreffende Information an eine Anschlußeinheit weiterzuleiten ist, die zu der gleichen Anschlußgruppe LTG1 gehört. Anhand des zweiten Adressenteils erkennt die dezentrale Steuereinrichtung GP1, daß die Informationen zu der Anschlußeinheit 1DIU2 weiterzuleiten ist. Aufgrund dessen steuert die dezentrale Steuereinrichtung GP1 die Zeitmultiplex-Koppeleinrichtung GS1 so, daß ein Übertragungsweg von der dezentralen Steuereinrichtung GP1 zur Anschlußeinheit 1DIU2 durchgeschaltet wird, der also über die Ruheseite des Umschalters 1d2 verläuft.

In Abwandlung von dem zuvor Beschriebenen kann auch vorgesehen werden, daß die dezentrale Steuereinrichtung GP1 in dem angegebenen Zusammenhang nicht auch die Information mit der betreffenden Adresse empfängt, sondern lediglich die Adresse selber, und daß sie anhand derselben einen direkten Übertragungsweg für die Information von dem über die Zeitmultiplex-Leitung L1/1 verlaufenden Signalkanal über die Zeitmultiplex-Koppeleinrichtung GS1 und die Ruheseite des Umschalters 1d2 zur Anschlußeinrichtung 1DIU2 durchschaltet. In diesem Falle wird also die Adresse über den Signalkanal in der dezentralen Steuereinrichtung GP1 empfangen und hier zur Durchschaltung eines Direktweges von dem genannten Signalkanal zu der betreffenden Anschlußeinheit verwendet. In diesem Falle würde also eine Zwischenspeicherung der betreffenden Information in der dezentralen Steuereinrichtung GP1 entfallen.

In diesem Zusammenhang ist noch die spezielle Notbetriebssituation zu erläutern. Wie bereits erwähnt wurde, kann eine störungsbedingte Notbetriebssituation dadurch verursacht sein, daß der Signalkanal zwischen einer Anschlußgruppe und dem zentralen Prozessor nicht benutzbar ist, oder daß die dezentrale Steuereinrichtung, zum Beispiel GP2, und/oder die Zeitmultiplex-Koppeleinrichtung, zum Beispiel GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, das im einzelnen in der bereits genannten Zeitschrift "telcom report", sowie in der deutschen Offenlegungsschrift 3 106 903 im einzelnen beschrieben ist. Erkennt der zentrale Prozessor eine Betriebsstörung, die zum Beispiel die Anschlußgruppe LTG2 betrifft, so erfolgt der gesamte weitere Datenaustausch zwischen zentralem Prozessor ZW1 und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in ihre Arbeitslage umgelegt. Dies kann auf zweierlei Weise erfolgen. Es kann vorgesehen sein, daß die aufgetretene Betriebsstörung innerhalb der von ihr betroffenen Anschlußgruppe selber erkannt wird. Dies kann dadurch geschehen, daß der der ständigen Überprüfung der vollen Funktionsfähigkeit jeder der Anschlußgruppen dienende Datenaustausch mit dem zentralen Prozessor gemäß der zuletzt genannten deutschen Offenlegungsschrift nicht mehr stattfindet, und daß dies innerhalb der betreffenden Anschlußgruppe erkannt wird. Aufgrund dessen kann die erwähnte Betätigung der Umschalter 2d1 bis 2d4 innerhalb der betreffenden Anschlußgruppe durch ihre dezentrale Steuereinrichtung, zum Beispiel GP2 selber vorgenommen werden. Jedoch kann auch vorgesehen sein, daß der zentrale Prozessor ZW1 die die Anschlußgruppe LTG2 betreffende Betriebsstörung erkennt, und daß er eine entsprechende Information hierüber an die dezentrale Steuereinrichtung GP1 der paarweise zugeordneten Anschlußgruppe LTG1 überträgt, und daß diese dann einen Befehl zur Betätigung der genannten vier Umschalter in der Anschlußgruppe LTG2 an diese überträgt.

Im Zustand der die Anschlußgruppe LTG2 betreffenden Betriebsstörung sind also die Umschalter 2d1 bis 2d4 betätigt. Dementsprechend sind die Anschlußeinheiten 2DIU1 bis 2DIU4 mit der Zeitmultiplex-Koppeleinrichtung GS1 der Anschlußgruppe LTG1 verbunden.

Erkennt der zentrale Prozessor ZW1 die die Betriebsstörung der Anschlußgruppe LTG2 betreffende Funktionsstörung, erkennt er also, daß der weitere Datenaustausch mit den entsprechenden Anschlußeinheiten 2DIU1 bis 21DIU4 über den Signalkanal der Anschlußgruppe LTG1 abzuwickeln ist, so gibt er eine entsprechende Information auch an den Adressen-Signal-Umsetzer U11/U12 in der Eingabe-Ausgabe-Einrichtung G1. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u1 zum elektronischen Wähler W1 hin abgibt, die bewirkt, daß in diesem Falle anstelle des Signalkanals der Anschlußgruppe LTG2 vielmehr der Signalkanal der Anschlußgruppe LTG1 durch den elektronischen Wähler W1 angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebes der Anschlußgruppe LTG2 ab. Im Adressen-signalkanal-Umsetzer U11/U12 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Eingabe-Ausgabe-Einrichtung mit Hilfe des elektronischen Wählers W1 aufgrund der vorläufigen Änderung der im Adressen-Signalkanal-Umsetzer U11/U12 gespeicherten Signalkanalnummern, die als Steuerinformationen fallweise aus jenem abgerufen und zur Steuerung des Wählers W1 zugeführt werden.

Wird nun eine Information samt der zu ihr gehörenden, aus erstem Adressenteil und zweitem Adressenteil bestehenden Adresse störungsbedingt zur Anschlußgruppe LTG1 geschickt, obwohl die betreffende Information für eine der Anschlußeinheiten 2DIU1 bis 2DIU4 bestimmt ist, so erkennt die dezentrale Steuereinrichtung GP1 anhand des ersten Adressenteils zunächst, daß die betreffende Information für eine Anschlußeinheit der jeweils anderen Anschlußgruppe bestimmt ist. Anhand des zweiten Adressenteils erkennt diese dezentrale Steuereinrichtung die jeweilige Anschlußeinheit für die die Information bestimmt ist. Aufgrund des ersten Adresenteils und aufgrund des zweiten Adressenteils leitet die dezentrale Steuereinrichtung GP1 die betreffende Information zu derjenigen Anschlußeinheit der anderen Anschlußgruppe LTG2 weiter, für die sie bestimmt ist. Hierzu schaltet die dezentrale Steuereinrichtung GP1 einen Übertragungsweg über die Zeitmultiplex-Koppeleinrichtung GS1 durch, über den die Information dann übertragen wird. Dies erfolgt über einen entsprechenden Anschluß der Zeitmultiplex-Koppeleinrichtung GS1 und die Arbeitsseite des betreffenden Umschalters, zum Beispiel 2d2. Auch in diesem Falle kann die betreffende Information in der dezentralen Steuereinrichtung GP1 zwischengespeichert werden und dann von ihr aus zu der betreffenden Anschlußeinheit, zum Beispiel 2DIU2 hin übertragen werden, oder es kann in der oben beschriebenen Weise vorgesehen sein, daß auch in dem hier beschriebenen Betriebsfall ein Direktweg von dem über die Zeitmultiplexleitung L1/1 verlaufenden Signalkanal über die Zeitmultiplex-Koppeleinrichtung GS1 und über den in Arbeitslage befindlichen Umschalter 2d2 zur Anschlußeinrichtung 2DIU2 durchgeschaltet wird.

Auf die zuvor beschriebene Weise können sowohl Informationen vom zentralen Prozessor zu jeder der Anschlußeinheiten, als auch in umgekehrter Richtung übertragen werden. Im letzterem Falle kann die vom zentralen Prozessor zur betreffenden Anschlußeinheit übertragene Information eine Abrufinformation sein, aufgrund deren in umgekehrter Richtung dann die zu übertragende und abgerufene Information von der betreffenden Anschlußeinrichtung zum zentralen Prozessor hin übertragen wird. Auf die gleiche Weise kann auch die Informationsübertragung von Anschlußgruppe zu Anschlußgruppe erfolgen, wie sie in der deutschen Patentschrift 3 128 365 beschrieben ist. Auf diese Weise können also Informationen von einer Anschlußeinheit einer Anschlußgruppe zu einer Anschlußeinheit einer anderen Anschlußgruppe übertragen werden, wobei diese Informationen vom zentralen Prozessor ZW1 nicht selber aufgenommen werden müssen, sondern nach Ankunft von einer Anschlußeinheit in der Eingabe-Ausgabe-Einrichtung G1 von hier aus direkt zu der betreffenden Anschlußeinrichtung übertragen werden, für die sie bestimmt sind. Dies ist möglich durch die in der zuletzt angegebenen Patentschrift beschriebene Weiterleitung der Informationen innerhalb der Eingabe-Ausgabe-Einrichtung G1.

Wie bereits aus dem bisherigen Teil der Beschreibung hervorgeht, ist ein der Verbindungsdurchschaltung dienendes zentrales Koppelfeld K1/K2 zweifach vorgesehen. Ebenso zweifach ist ein zentraler Prozessor ZW1/ZW2 vorgesehen, wobei das eine Koppelfeld, zum Beispiel K1 und der eine zentrale Prozessor, zum Beispiel ZW1, einander zugeordnet sind, was auch für das andere Koppelfeld und den anderen zentralen Prozessor gilt. Der zentrale Prozessor dient in bekannter Weise unter anderem der Steuerung seines zentralen Koppelfeldes sowie einer hierfür erforderlichen Schaltkennzeichenverarbeitung. Jeder der beiden Prozessoren ist in bekannter Weise programmgesteuert. Die Dopplung von Koppelfeld und zentralem Prozessor dient in bekannter Weise zur Ersatzschaltemöglichkeit (stand-by-Betrieb). Für den Fall einer Funktionsstörung und/oder eines schaltungstechnischen Fehlers in einem der beiden Koppelfelder und/oder in einem der beiden zentralen Prozessoren und/oder in einem von ihnen jeweils zugeordneten weiteren Aggregaten besteht in bekannter Weise die Möglichkeit, daß der Vermittlungsbetrieb statt mit dem einen zentralen Koppelfeld, zum Beispiel K1, und dem einen der beiden zentralen Prozessoren, zum Beispiel ZW1, vielmehr mit dem anderen der beiden Koppelfelder, zum Beispiel K2, und dem anderen der beiden zentralen Prozessoren, zum Beispiel ZW2 fortgesetzt wird - und umgekehrt -.

Ebenfalls wurde bereits erläutert - wie auch bereits durch die genannten Literaturstellen bekannt ist -, daß eine Mehrzahl von dezentralen Anschlußgruppen mit je einem Teilkoppelfeld zum außenseitigen Anschluß von Verbindugns- und/oder Teilnehmerleitungen, bzw. entsprechenden Kanälen, und mit einer dezentralen programmierbaren Steuereinrichtung zur Schaltkennzeichenaufnahme von diesen Leitungen, zur Schaltkennzeichenvorverarbeitung und -weiterleitung an den betreffenden zentralen Prozessor und zur Schaltkennzeichenaussendung auf die genannten Leitungen, bzw. Kanäle, ausgestattet ist. So weist zum Beispiel die Anschlußgruppe LTG1 das Teilkoppelfeld GS1 und die dezentrale Steuereinrichtung GP1 auf. An das Teilkoppelfeld GS1 sind außenseitig die Einrichtungen 1DIU1 bis 1DIU4 angeschlossen, die bereits weiter oben erwähnt wurden. Innenseitig sind an das Teilkoppelfeld die beiden Zeitmultiplexleitungen L1/1 und L1/2 angeschlossen, die zu den beiden zentralen Koppelfeldern K1 und K2 führen. Jede dieser Zeitmultiplexleitungen umfaßt - wie bereits ebenfalls weiter oben erläutert wurde -eine Anzahl von zum Beispiel dreißig Kanalpaaren, wobei jeweils ein Kanalpaar einen Übertragungskanal in der einen Übertragungsrichtung und einen Übertragungskanal in der anderen Übertragungsrichtung enthält. Jedes dieser Kanalpaare bildet eine Linkleitung. Folglich ist jedes Teilkoppelfeld, zum Beispiel GS1, über zwei Gruppen von Linkleitungen gruppenweise getrennt mit Koppelfeldanschlüssen einerseits des einen und andererseits des anderen der beiden parallel vorgesehenen Koppelfelder verbunden.

Ebenfalls wurde bereits erwähnt - was auch aus den weiter oben genannten Literaturstellen zu entnehmen ist -, daß für einen der Schaltkennzeichenbehandlung dienenden Datenaustausch zwischen den dezentralen Steuereinrichtungen einerseits und dem jeweils betriebsbereiten Prozessor andererseits Datenverbindungen in betriebsbereiten Zustand gebracht bzw. in ihm gehalten werden. Bei dieser Schaltkennzeichenbehandlung handelt es sich darum, daß von Teilnehmern abgegebene Wahlinformationen sowie über bereits aufgebaute oder teilaufgebaute Verbindungswege eintreffende Schaltkennzeichen, die über die dezentralen Anschlußgruppen eintreffen, dem jeweiligen zentralen Prozessor nach einer Vorverarbeitung der jeweiligen dezentralen Steuereinrichtung zugeführt werden, wodurch dieser Einstellinformationen für sein zentrales Koppelfeld sowie Schaltkennzeichen und Steuerinformationen erarbeitet, die zur Aussendung über die betreffenden Verbindungen dem jeweiligen dezentralen Steuerwerk wieder zugeleitet werden und hier zur Aussendung kommen und/oder zur Anschaltung von Hörtonsignalen, Rufsignalen und dergleichen für die betreffenden Teilnehmer führen. Der für diese Schaltkennzeichenbehandlung dienende Datenaustausch zwischen jedem der dezentralen Steuerwerke einerseits und dem betreffenden zentralen Prozessor andererseits erfolgt über Datenverbindungen, die zwischen jeder der dezentralen Steuereinrichtungen einerseits über das jeweils in Betrieb befindliche Koppelfeld mit dem jeweils in Betrieb befindlichen Prozessor hergestellt und ständig in betriebsbereitem Zustand gehalten werden. Diese Datenverbindungen werden ähnlich wie Nachrichtenverbindungen über das zentrale Koppelfeld hergestellt. Sie verlaufen in der bereits angegebenen Weise über die Einrichtungen MB1 und G1, sofern das Koppelfeld K1 und der zentrale Prozesor ZW1 sich zur Zeit in Betrieb befindet.

Die genannten Datenverbindungen zwischen jeder der dezentralen Steuereinrichtungen jeder der Anschlußgruppen einerseits und dem jeweils in Betrieb befindlichen zentralen Prozessor dienen nicht nur für den genannten, zur Abwicklung der erwähnten Schaltkennzeichenbehandlung durchgeführten Datenaustausch, sondern diese Datenverbindungen dienen auch dazu, daß beim Inbetriebgehen eines zentralen Prozessors und des ihm zugeordneten zentralen Koppelfeldes, dieser zentrale Prozessor Programm- und Vermittlungs-Software an sämtliche dezentralen Steuereinrichtungen sämtlicher Anschlußgruppen überträgt. Dies wird auch als "Laden" bezeichnet und ist in großer Ausführlichkeit in der bereits genannten Zeitschrift "telcom report", Beiheft 1981, insbesondere Seite 19 ff beschrieben. Hierzu ist im Falle des vorliegenden beschriebenen Ausführungsbeispiels eine mit dem zentralen Prozessor, zum Beispiel ZW1, verbundene Eingabe-Ausgabe-Einrichtung, zum Beispiel G1, vorgesehen, an die mehrere Daten-Pufferspeichereinrichtungen, zum Beispiel MB1, angeschlossen sind; von jeder derselben führt eine Mehrzahl von Datenverbindungen über das betreffende Koppelfeld, zum Beispiel K1, zu den dezentralen Steuereinrichtungen der genannten Anschlußgruppen. Diese Daten-Pufferspeicher sind mit Link-Anschlüssen einzeln wie die Link-Leitungen mit Anschlüssen des Koppelfeldes fest verbunden. Wie bereits ausgeführt wurde, ist eine Link-Leitung und dementsprechend auch ein Link-Anschluß jeweils durch ein Kanalpaar realisiert. Die Kanalpaare gehören zu den an das Koppelfeld K1bzw. K2 angeschlossenen Zeitmultiplexleitungen.

Die für den Vermittlungsbetrieb erforderlichen und in den dezentralen Steuereinrichtungen zu speichernden vermittlungstechnischen Informationen, wie zum Beispiel Teilnehmeranschlußlage-Teilnehmerrufnummer-Zuordnungen, Teilnehmerberechtigungen und technischen Merkmale von angeschlossenen Verbindungsleitungen und dergleichen, sowie Programminformationen, die für die Abwicklung der vermittlungstechnischen Funktionen maßgebend sind, werden zunächst entsprechenden Speichern der beiden zentralen Prozessoren eingegeben und werden von hier aus beim Inbetriebgehen eines zentralen Prozessors zu den dezentralen Steuereinrichtungen der verschiedenen Anschlußgruppen übertragen und hier gespeichert. Diese Übertragung und Speicherung erfolgt pro Anschlußgruppe einzeln, das heißt für die dezentralen Steuereinrichtungen der verschiedenen Anschlußgruppen einzeln nacheinander. Der hierfür erforderliche Zeitaufwand bei Einschaltung einer Vermittlungsstelle ist im Vergleich zu den in Zusammenhang mit der Einrichtung einer Vermittlungsstelle erforderlichen gesamten Arbeiten verschwindend gering. Stärker fällt dieser Zeitaufwand jedoch ins Gewicht im Falle einer Ersatzschaltung des zentralen Prozessors und des zentralen Koppelfeldes. Für diesen Fall ist ebenso vorgesehen, die dezentralen Steuereinrichtungen der Anschlußgruppen mit den im zentralen Prozessor gespeicherten vermittlungstechnischen Informationen und Programminformationen zu laden, um mit Sicherheit einen völligen Gleichlaut zwischen diesen Informationen, die also einerseits im neu in Betrieb gehenden zentralen Prozessor und andererseits in den dezentralen Steuereinrichtungen gespeichert sind, zu gewährleisten. Hierdurch werden jegliche Abweichungen ausgeschlossen,die sonst entstehen könnten, bezüglich dieser vermittlungstechnischen Informationen und dieser Programminformationen, die also einerseits im in Betrieb gehenden zentralen Prozessor und andererseits in den dezentralen Steuereinrichtungen jeder der verschiedenen Anschlußgruppen gespeichert sind. Solche Abweichungen könnten zum Beispiel dadurch entstehen, daß zwischenzeitlich Änderungen an diesen vermittlungstechnischen Informationen und/oder Programminformationen vorgenommen werden, oder auch dadurch, daß in den dezentralen Steuereinrichtungen diese Informationen durch irgendwelche Störeinflüsse verfälscht worden sind. Solche Abweichungen werden aber mit Sicherheit ausgeschlossen durch ein erneutes Laden sämtlicher dezentraler Steuereinrichtungen mit den Programinformationen und den vermittlungstechnischen Informationen seitens des in Zusammenhang mit der vorgesehenen Ersatzschaltung neu in Betrieb gehenden zentralen Prozessors.

Um nun den Vorgang des beschriebenen Ladens der Programminformationen und der vermittlungstechnischen Informationen aus dem in Zusammenhang mit einer vorgesehenen Ersatzschaltung neu in Betrieb gehenden zentralen Prozessor in die dezentralen Steuereinrichtungen der verschiedenen Anschlußgruppen zeitlich abzukürzen, ist vorgesehen, daß jeweils zwei Anschlußgruppen paarweise einander zugeordnet sind, daß in jeder derselben zum außenseitigen Anschluß von Teilnehmer- und/oder Verbindungsleitungen dienenden und innerhalb der jeweiligen Anschlußgruppe im Normalbetrieb mit ihrem Teilkoppelfeld verbundene Anschlußeinheiten im Notbetrieb teilweise umschaltbar sind. Es wird also Gebrauch gemacht von der bereits weiter oben im einzelnen beschriebenen technischen Verfahrensweise, wobei die erläuterte Umschaltung vom Normalbetrieb auf den Notbetrieb bei sämtlichen Anschlußgruppen in die Wege geleitet wird. Dadurch werden also die Anschlußeinheiten jeweils einer ersten von zwei paarweiseeinander zugeordneten Anschlußgruppen zusätzlich an das Teilkoppelfeld der jeweils anderen, also einer jeweils zweiten Anschlußgruppe angeschaltet, was bei sämtlichen paarweise einander zugeordneten Anschlußgruppen gleichermaßen stattfindet. Dabei wird für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung der jeweils anderen, also zweiten Anschlußgruppe durchgeführt.

In dieser Betriebssituation bedient also innerhalb von zwei paarweise einander zugeordneten Anschlußgruppen die dezentrale Steuereinrichtung nur einer derselben sämtliche Anschlußeinheiten, wie zum Beispiel Teilnehmeranschlußschaltungen, Mehrfachteilnehmeranschlußschaltungen, Verbindungsleitungsabschlußschaltungen, die auch Verbindungsleitungsmehrfachabschlußschaltungen sein können und dergleichen. In dieser Betriebssituation werden auch sämtliche Verbindungen, die über die Anschlußeinheiten beider Anschlußgruppe hergestellt werden, über das Teilkoppelfeld nur der einen der beiden Anschlußgruppen durchgeschaltet. Ausgehend davon, daß in dieser Betriebssituation die Anschlußeinheiten jeweils einer ersten dieser beiden Anschlußgruppen zusätzlich an das Teilkoppelfeld der jeweils anderen Anschlußgruppe angeschaltet werden, erfolgt also die gesamte Verbindungsherstellung über das Teilkoppelfeld der zweiten Anschlußgruppe mit Hilfe von ihrer dezentralen Steuereinrichtung. Dabei sind die beiden Anschlußgruppen an sich völlig gleichberechtigt, das heißt diese Umschaltung kann bezüglich dieser beiden Anschlußgruppen auch umgekehrt erfolgen. Die gesamte weitere Betriebsabwicklung erfolgt dann vorläufig in der gleichen Weise, wie in dem weiter oben detailliert beschriebenen Notbetrieb. In dieser Betriebssituation befinden sich sämtliche Anschlußgruppen gleichsam im Notbetrieb.

Nach Herstellung des Notbetriebszustandes ist die Hälfte sämtlicher dezentraler Steuereinrichtungen dem Vermittlungsbetrieb entzogen, ebenso auch die Hälfte sämtliche Teilkoppelfelder, und zwar jeweils eine dezentrale Steuereinrichtung und jeweils das ihm zugeordnete Teilkoppelfeld pro Paar von Anschlußgruppen.

Eine Ersatzschaltung eines der beiden zentralen Prozessoren durch den jeweils anderen zentralen Prozessor wird also noch während zunächst weiterlaufendem Betrieb des bis dahin in Betrieb befindlichen zentralen Prozessors dadurch vorbereitet, daß sämtliche paarweise einander zugeordneten Anschlußgruppen vom Normalbetrieb in den Notbetrieb übergeführt werden; ferner stellt der andere zentrale Prozessor Datenverbindungen über das ihm zugeordnete andere Zentrale Koppelfeld zu den dezentralen Steuereinrichtungen aller ersten Anschlußgruppen her. Dies geschieht in der weiter oben bereits beschriebenen Weise. Diese Verbindungen werden also zu den dezentralen Steuereinrichtungen aller derjenigen Anschlußgruppen hergestellt, deren Anschlußeinheiten jeweils zum Teilkoppelfeld der paarweise zugeordneten anderen Anschlußeinheit umgeschaltet worden sind, also derjenigen Anschlußgruppen, deren dezentrale Steuereinrichtungen und deren Teilkoppelfelder in Zusammenhang mit der in vorbereitung befindlichen Ersatzschaltung dem normalen Vermittlungsbetrieb entzogen worden sind.

Über die zuvor beschriebenen neu hergestellten Datenverbindungen lädt nun der in Zusammenhang mit der bevorstehenden Ersatzschaltung neu in Betrieb gehende zentrale Prozessor die gesamten Programminformationen und die gesamten vermittlungstechnischen Informationen in die betreffenden dezentralen Steuereinrichtungen, bzw. in entsprechende Speicher derselben. Dieser zentrale Prozessor überträgt also anschließend nacheinander an die betreffenden dezentralen Steuereinrichtungen, die zur Zeit dem regulären Vermittlungsbetrieb entzogen sind, die für ihren erneuten Betriebsbeginn erforderliche Programm- und Vermittlungs-Software zwecks Speicherung derselben in ihnen. Dies geschieht seitens des in Zusammenhang mit der bevorstehenden Ersatzschaltung in Betrieb gehenden zentralen Prozessors bereits vorbereitend während einer Übergangszeit, in der der andere zentrale Prozessor noch den Vermittlungsbetrieb mit denjenigen dezentralen Steuereinrichtungen und Teilkoppelfeldern fortführt, die hierzu vom Normalbetrieb in den Notbetrieb übergeführt worden sind zwecks Vorbereitung der beabsichtigten Ersatzschaltung.

Sind die zuvor beschriebenen, eine Ersatzschaltung vorbereitenden Vorgänge des Ladens von Programminformationen und vermittlungstechnischen Informationen abgewickelt, so erfolgt die Ersatzschaltung. Dabei geht in bekannter Weise die Gesamtheit der zentralen Datenverarbeitungs- und Steuerfunktionen von dem einen zentralen Prozessor auf den anderen zentralen Prozessor über, wobei auch das eine zentrale Koppelfeld durch das andere zentrale Koppelfeld ersetzt wird. Dabei kann vorgesehen werden, daß bereits bestehende Verbindungen bestehen bleiben können bis zu ihrer Auslösung. Sämtliche neue Verbindungen werden dann mit Hilfe der neu geladenen dezentralen Steuereinrichtung hergestellt, und zwar über die ihnen jeweils zugeordneten Teilkoppelfelder. Die anderen dezentralen Steuereinrichtungen und die ihnen zugeordneten Teilkoppelfelder werden für weitere Verbindungsherstellungen nicht mehr benutzt. In diesem Zusammenhang erfolgt dann eine Umschaltung innerhalb der Anschlußgruppen mit Hilfe der in Figur 2 dargestellten Umschaltekontakte 1d1 bis 2d4. Anschließend wird der Vermittlungsbetrieb also fortgesetzt mit Hilfe derjenigen dezentralen Steuereinrichtungen, die bis zur erfolgten Ersatzschaltung dem normalen Vermittlungsbetrieb entzogen war und über die zugeordneten Teilkoppelfelder. Diejenigen dezentralen Steuereinrichtungen und zugeordneten Teilkoppelfelder, die bis zum Zeitpunkt der Ersatzschaltung den Vermittlungsbetrieb im Quasi-Notbetrieb fortgeführt haben, gehen zunächst außer Betrieb. Dann aber baut derjenige zentrale Prozessor, der in Zusammenhang mit der Ersatzschaltung in Betrieb gegangen ist, nacheinander auch Datenverbindungen zu allen denjenigen dezentralen Steuereinrichtungen auf, die in Zusammenhang mit der erfolgten Ersatzschaltung zunächst außer Betrieb gegangen sind. Anschließend lädt der zentrale Prozessor die erforderlichen Programminformationen und vermittlungstechnischen Informationen auch in die Speicher dieser dezentralen Steuereinrichtungen. Dies geschieht zeitlich eingestreut in die normalen Vermittlungsvorgänge. Nachdem der dezentrale Prozessor sämtliche dezentralen Steuereinrichtungen mit den erforderlichen Programminformationen und den betreffenden vermittlungstechnischen Informationen geladen hat, wird sukzessive nacheinander bei den paarweise einander zugeordneten Anschlußgruppen die Betriebsweise wieder vom Notbetrieb in den Normalbetrieb zurücküberführt.

Nachdem die Beschreibung des in den Zeichnungen auszugsweise dargestellen Ausführungsbeispieles der Erfindung eine Zeitmultiplex-Fernsprechvermittlungsanlage, in der die Erfindung angewendet ist, in allgemeineren Zusammenhängen beschrieben hat, wendet sie sich nun den erfindungswesentlichen Zusammenhängen in besonderer Weise zu.

Wie bereits ausgeführt wurde, ist zur Vorbereitung eines Ersatzschaltevorganges vorgesehen, daß von demjenigen zentralen Prozessor, z. B. dem zentralen Prozessor ZW2, der beim Ersatzschaltevorgang die zentralen Prozessorfunktionen anstelle des anderen zentralen Prozessors, z. B. ZW1, übernimmt, über das dem hierbei diese Funktionen übernehmenden zentralen Prozessor, z. B. ZW2, zugeordnete zentrale Koppelfeld, z. B. K2, einzeln Datenverbindungen zu den dezentralen Steuereinrichtungen aller ersten Anschlußgruppen durchgeschaltet werden, also in betriebsbereiten Zustand gebracht werden; wie bereits ausgeführt wurde, sind die Anschlußgruppen einander jeweils paarweise zugeordnet und im hier beschriebenen Ausführungs- und Funktionsbeispiel sind innerhalb jeder der beiden einander zugeordneten Anschlußgruppen zum außenseitigen Anschluß von Teilnehmer- und/oder Verbindungsleitungen dienende und innerhalb der jeweiligen Anschlußgruppe primär, d.h. im völlig störungsfreien Normalbetrieb, mit ihrem Teilkoppelfeld, z. B. GS1, verbundene Anschlußeinheiten, z. B. 1DIU1, 1DIU2 und weitere, in einer Weise mit Hilfe von Umschaltern, z. B. 1d2, umschaltbar, durch die diese Anschlußeinheiten jeweils dieser ersten Anschlußgruppe, z. B. LTG1 zusätzlich an das Teilkoppelfeld, z. B. GS2, der jeweils anderen, also der jeweils zweiten Anschlußgruppe, z. B. LTG2, angeschaltet werden, woraufhin für die über die umgeschalteten Anschlußeinheiten durchzuschaltenden Verbindungen die entsprechende Schaltkennzeichenbearbeitung sowie Teilkoppelfeld-Einstellung ebenfalls von der dezentralen Steuereinrichtung, z. B. GP2, der anderen, also zweiten Anschlußgruppe, z. B. LTG2, durchgeführt wird.

Zwecks besseren Überblickes über die Einzelheiten des hier beschriebenen Funktionsbeispieles ist also insoweit zusammenfassend festzustellen, daß im ungestörten Normalbetrieb zunächst der zentrale Prozessor ("der eine Prozessor") ZW1 arbeitet, und daß sämtliche Verbindung über das ihm zugeordnete Koppelfeld ("das eine Zentralkoppelfeld") K1 hergestellt werden, und daß zur Vorbereitung einer Ersatzschaltung dieses Zentralprozessors und dieses Zentralkoppelfeldes innerhalb jedes der Paare von Anschlußgruppen die Steuerungsfunktionen und die Verbindungsdurchschaltefunktionen von der dezentralen Steuereinrichtung GP2 und dem Teilkoppelfeld GS2 der zweiten Anschlußgruppe LTG2 übernommen werden, also auch für die Anschlußeinheiten, die zu der ersten Anschlußgruppe LTG1 gehören; ferner baut derjenige Zentralprozessor, der beim Ersatzschaltevorgang die Zentralprozessor-Funktionen übernimmt, also der Zentralprozessor ZW2, Datenverbindungen in der weiter oben bereits beschriebenen Weise über das Zentralkoppelfeld K2 auf, und zwar zu den dezentralen Steuereinrichtungen aller derjenigen Anschlußgruppen, die in dem hier beschriebenen Funktionsbeispiel als die "ersten Anschlußgruppen" bezeichnet sind, also zur dezentralen Steuereinrichtung GP1 der Anschlußgruppe LTG1. Die für diese Anschlußgruppe durchgeschaltete neue Datenverbindung wird also unter anderem auch über ihr Teilkoppelfeld, z. B. GS1 in betriebsbereiten Zustand gebracht.

Zur Vorbereitung eines Ersatzschalte-Vorganges werden also unter anderem auch Datenverbindungen von dem zentralen Prozessor ZW2 über das ihm zugeordnete Zentralkoppelfeld K2 zu den dezentralen Steuereinrichtungen (GP1 und weiteren) aller ersten Anschlußgruppen (LTG1 und weiteren) in betriebsbereiten Zustand gebracht. In erfindungsgemäßem Zusammenhang ist ferner vorgesehen, daß Verbindungsdaten, die bzgl. aller über das bei einem bestehenden Ersatzschaltervorgang jeweils noch in Betrieb befindliche Zentralkoppelfeld, z. B. K1, und über die Teilkoppelfelder, z. B. GS2, der jeweils zweiten Anschlußgruppen, z. B. LTG2 bestehender individueller Verbindungen angeben, welcher außenseitige Teilkoppelfeldanschluß mit welchem seinesgleichen verbunden ist, von der Steuereinrichtung GP2 der zweiten Anschlußgruppe LTG2 an die Steuereinrichtung GP1 der ersten Anschlußgruppe LTG1 übertragen werden. Diese Verbindungsdaten geben also an, welche Teilnehmerleitung, Verbindungsleitung oder andere verbindungsindividuelle Schalteinrichtung mit welcher Teilnehmerleitung, Verbindungsleitung oder anderen verbindungsindividuellen Schalteinrichtung über Teilkoppelfelder und Zentralkoppelfeld verbunden ist. Solche Verbindungen können sowohl innerhalb jeweils eines Paares von Anschlußgruppen, aber auch zwischen Anschlußgruppen jeweils verschiedener solcher Paare verlaufen. Wesentlich in diesem Zusammenhang ist nicht der Durchschalteweg-Verlauf innerhalb der Teilkoppelfelder und innerhalb des jeweiligen Zentralkoppelfeldes sondern lediglich Verbindungsdaten darüber, welcher außenseitige Teilkoppelfeldanschluß mit welchem seinesgleichen innerhalb der gesamten Fernsprechvermittlungsanlage jeweils verbunden ist. Diese Verbindungsdaten können auch pro bestehende Verbindung angeben, welche beiden außenseitigen Teilkoppelfeldanschlüsse mit welchen beiden Zentralkoppelfeldanschlüssen und welcher Zentralkoppelfeldanschluß mit seinesgleichen verbunden ist. In diesem Falle ist also bzgl. des jeweiligen Durchschaltewegverlaufes innerhalb der Teilkoppelfelder und des Zentralkoppelfeldes auch die Stelle des Überganges vom jeweiligen Teilkoppelfeld zum Zentralkoppelfeld und umgekehrt festgelegt.

Die zuvor genannten Verbindungsdaten sind zu dem hier beschriebenen Zweck in den dezentralen Steuereinrichtungen speicherbar, und zwar in dezentralen Speichern GR1 und GR2, die den dezentralen Steuereinrichtungen GP1 und GP2 individuell zugeordnet sind. Es kann vorgesehen werden, daß in diesen Speichern der dezentralen Steuereinrichtungen der Anschlußgruppen die Speicherung der Verbindungswege, die jeweils über die Partner-Anschlußgruppe durchgeschaltet sind, jederzeit stattfindet, d.h. im störungsfreien Normalbetrieb. In diesem Falle ist also in dem zugeordneten Speicher der einen Anschlußgruppe jeweils festgehalten, welche Verbindungen über die jeweils andere Anschlußgruppe verlaufen.

Demgegenüber besteht auch die Möglichkeit, eine solche Speicherung nur vorzunehmen, wenn ein Ersatzschaltevorgang in Vorbereitung ist. Jedenfalls aber ist eine die über die jeweilige Partner-Anschlußgruppe durchgeschaltete Verbindungswege betreffende Speicherung von Verbindungsdaten der angegebenen Art in der beschriebenen Weise vorgesehen.

Erfindungsgemäß ist nun zur Vorbereitung eines Ersatzschaltevorganges weiterhin vorgesehen, daß die dezentrale Steuereinrichtung, z. B. GP1, derjenigen Anschlußgruppe, z. B. LTG1, zu der der bei der in Vorbereitung befindlichen Ersatzschaltung die Zentralprozessorfunktionen übernehmende Zentralprozessor, z. B. ZW2, bereits die Datenverbindungen über sein Zentralkoppelfeld, z. B. K2, aufgebaut hat, ein Anforderungssignal an die dezentrale Steuereinrichtung, z. B. GP2, der jeweiligen Partner-Anschlußgruppe, z. B. LTG2 hin abgibt. Aufgrund eines solchen Anforderungssignales überträgt die letztgenannte dezentrale Steuereinrichtung, z. B. GP2 sämtliche Verbindungsdaten, die in ihrem Speicher, z. B. GR2, gespeichert sind, zu der dezentralen Steuereinrichtung, z. B. GP1, von der zuvor das Anforderungssignal abgegeben wurde. Zur Übertragung des Anforderungssignales und der Verbindungsdaten in der umgekehrten Richtung dienen Übertragungswege GL1/2, die einem jeden der Anschlußgruppen-Paare individuell zugeordnet sind.

Die auf die zuvor beschriebene Weise übertragenen Verbindungsdaten werden nun durch die dezentrale Steuereinrichtung, z. B. GP1, gespeichert, die zuvor das Anforderungssignal abgegeben hat. Diese Speicherung kann in ihrem jeweiligen Speicher, z. B. GR1 oder in noch einem anderen Speicher ähnlicher Art erfolgen.

Sind auf die zuvor beschriebene Weise zur Vorbereitung eines Ersatzschaltevorganges die Verbindungsdaten innerhalb jedes Paares von Anschlußgruppen übertragen worden, so werden sie anschließend aus diesen durch den Zentralprozessor abgerufen, der beim Ersatzschaltevorgang die Zentralprozessorfunktionen übernimmt.

Aufgrund der Verbindungsdaten, die der betreffende, im Ersatzschaltefall die Zentralprozessorfunktionen übernehmende Zentralprozessor, z. B. ZW2, auf die zuvor beschriebene Weise abruft, baut dieser Zentralprozessor Verbindungen sowohl über sein Zentralkoppelfeld, z. B. K2 auf, als auch über das Teilkoppelfeld, z. B. GS1, derjenigen Anschlußgruppe, z. B. LTG1, von deren dezentralem Steuerwerk, z. B. GP1 das Anforderungssignal ausgegangen war, und die die Verbindungsdaten von ihrer jeweiligen Partner-Anschlußgruppe über den Übertragungsweg GL1/2 erhalten hatte. Auf diese Weise werden also zur Vorbereitung des Ersatzschaltevorganges in dem Zentralkoppelfeld z. B. K2, desjenigen Zentralprozessors, z. B ZW2, der bei dem Ersatzschaltevorgang die Zentralprozessorfunktionen übernimmt, Verbindungen aufgebaut, die letztlich zur Übernahme der in der momentanen Betriebssituation bestehenden individuellen Verbindungen dienen. In entsprechender Weise werden auch Verbindungen innerhalb des jeweiligen Teilkoppelfeldes, z. B. GS1, durchgeschaltet, die dem gleichen Zweck dienen. In dieser Weise werden also sämtliche Verbindungen, die in der jeweils momentanen Betriebssituation bestehen und seitens der angeschlossenen Teilnehmer in Benutzung sind, nachgebildet. Dies gilt für sämtliche Paare von Anschlußgruppen. Sodann erfolgt durch einen Umschaltevorgang die Ersatzschaltung selber in der Weise, daß die Umschalter 1d2 und 2d2 sämtlich betätigt werden, wobei der Umschalter 1d2 in seine dargestellte Ruhelage zurückkehrt, wohingegen der Umschalter 2d2 in seine Arbeitslage (anders als dargestellt) umgelegt wird. Durch diesen Umschaltevorgang, der in sämtlichen Anschlußgruppen gleichzeitig oder nahezu gleichzeitig erfolgt, wird der gesamte Fernsprechbetrieb lückenlos fortgesetzt, d.h. ohne eine Betriebsunterbrechung, sowie ohne Unterbrechung bestehender individueller Verbindungen.

Damit die Umschaltevorgänge in sämtlichen Anschlußgruppen gleichzeitig erfolgen können, kann vorgesehen werden, daß eine vorbereitendes Umschaltesignal an sämtliche Anschlußgruppen abgegeben wird und in Verbindung damit eine Uhrzeitinformation; tritt dann der durch diese Uhrzeitinformation festgelegte Zeitpunkt ein, so erfolgt die der Ersatzschaltung dienende beschriebene Umschaltung in sämtlichen Anschlußgruppen gleichzeitig.

Zur Übertragung des jeweiligen Anforderungssignales sowie der Verbindungsdaten dient pro Anschlußgruppen-Paar ein in jedem derselben vorgesehener Übertragungsweg GL1/2. Dieser ist mit Sende- und Empfangseinrichtungen GA1 und GA2 jeder der betreffenden beiden Anschlußgruppen LTG1 und LTG2 verbunden. Diese Sende- und Empfangseinrichtungen sind individuell den dezentralen Steuereinrichtungen zugeordnet. Diese Sende- und Empfangseinrichtungen dienen unter anderem zur Abgabe des Anforderungssignales seitens einer dezentralen Steuereinrichtung und zum Empfang desselben der jeweils anderen dezentralen Steuereinrichtung. Ebenfalls dienen diese Sende- und Empfangseinrichtungen zur Abgabe und zur Aufnahme der gespeicherten Verbindungsdaten in der beschriebenen Weise. - Es besteht auch die Möglichkeit, den genannten, pro Anschlußgruppen-Paar vorgesehenen Übertragungsweg GL1/2 zusätzlich über die betreffenden Teilkoppelfelder zu führen. In diesem Falle ist eine Direktverbindung zwischen innenseitigen Anschlüssen der Teilkoppelfelder GS1 und GS2 vorzusehen.

Es sei auch noch auf die Möglichkeit hingewiesen, den Vermittlungsbetrieb in der Phase der Vorbereitung eines Ersatzschaltevorganges zu drosseln. In diesem Zusammenhang kann also vorgesehen werden, daß während der Dauer der Vorbereitung eines Ersatzschaltevorganges keine neuen Verbindungen hergestellt werden. Danach ist also vorgesehen, daß während der Übertragung der Verbindungsdaten von den dezentralen Steuereinrichtungen der zweiten Anschlußgruppen zu denen der ersten Anschlußgruppen und während der anhand dieser Daten erfolgenden Herstellung der Verbindungen eine Herstellung von durch rufende Teilnehmer gewählten Verbindungen verhindert ist. In diesem Zusammenhang kann vorgesehen werden, daß auch eine Herstellung von Verbindungen oder Teilverbindungen von im Anrufzustand sich befindenden Teilnehmerstellen zu verbindungsindividuellen Schalteinrichtungen, z. B. Wahlempfangssätzen verhindert ist. Dadurch wird die Möglichkeit gegeben, nach einer Übertragung der gespeicherten Verbindungsdaten in der beschriebenen Weise bzgl. der für die durchgeschalteten und von den betreffenden Teilnehmern benutzten Verbindungen einen vollständigen Ersatz vorzubereiten, der bei der Ausführung des Ersatzschaltevorganges zum Tragen kommt und ermöglicht, daß sämtliche bereits bestehenden und von den betreffenden Teilnehmern benutzten Verbindungen aufrecht erhalten werden.

**Patentansprüche**

1. Schaltungsanordnung für zentralgesteuerte Fernmelde-vermittlungsanlagen, insbesondere PCM-Zeitmultiplex-Fernsprechvermittlungsanlagen, in denen ein der Verbindungsdurchschaltung dienendes zentrales Koppelfeld (K1,K2) samt einem unter anderem dessen Steuerung sowie einer hierfür erforderlichen Schaltkennzeichenverarbeitung dienenden zentralen Prozessor (ZW1,ZW2) zur Ersatzschaltemöglichkeit (stand-by-Betrieb) zweifach vorgesehen ist, und in denen eine Mehrzahl von dezentralen Anschlußgruppen (LTG) mit je einem Teilkoppelfeld (GS) zum außenseitigen Anschluß von Verbindungs- und/oder Teilnehmerleitungen und mit je einer dezentralen Steuereinrichtung (GP) zur Schaltkennzeichenaufnahme von diesen Leitungen, zur Schaltkennzeichenvorverarbeitung sowie zur Schaltkennzeichenweiterleitung an den zentralen Prozessor (ZW1,ZW2) und zur Schaltkennzeichenaussendung auf diese Leitungen ausgestattet ist, und in denen in jeder dieser Anschlußgruppen (LTG) das jeweilige Teilkoppelfeld (GS) innenseitig über zwei Gruppen von Linkleitungen (L1,L2) gruppenweise getrennt mit Koppelfeldanschlüssen einerseits des einen und andererseits des anderen der beiden parallel vorgesehenen zentralen Koppelfelder verbunden ist, und in denen für einen der obigen Schaltkennzeichenbehandlung dienenden Datenaustausch zwischen den dezentralen Steuereinrichtungen (GP) einerseits und dem jeweils betriebsbereiten Prozessor andererseits Datenverbindungen jeweils pro dezentrale Steuereinrichtung von jenem über das ihm zugeordnete Koppelfeld zu den dezentralen Steuereinrichtungen (GP) in betriebsbereiten Zustand gebracht bzw. in ihm gehalten werden, und in denen die Anschlußgruppen (LTG) jeweils zu zweit einander paarweise zugeordnet sind, und in denen innerhalb jeder derselben zum außenseitigen Anschluß von Teilnehmer- und/oder Verbindungs-Leitungen dienende und innerhalb der jeweiligen Anschlußgruppe primär mit ihrem Teilkoppelfeld verbundene Anschlußeinheiten (DIU), z.B. Teilnehmeranschlußschaltungen, Mehrfachteilnehmeranschlußschaltungen, Verbindungsleitungs(-mehrfach-)abschlußschaltungen und dergleichen, in einer Weise umschaltbar sind, durch die die Anschlußeinheiten (DIU) jeweils einer ersten dieser beiden Anschlußgruppen (LTG) zusätzlich an das Teilkoppelfeld (GS) der jeweils anderen, also einer jeweils zweiten Anschlußgruppe (DIU) angeschaltet werden, woraufhin für die über die umgeschalteten Anschlußeinheiten (DIU) durchzuschaltenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird, **dadurch gekennzeichnet,** daß eine durch die Umschaltung innerhalb jedes dieser Paare von einander zugeordneten Anschlußgruppen (LTG) zu bewirkende Ersatzschaltung eines der beiden zentralen Prozessoren (ZW1,ZW2) samt zugeordnetem Zentralkoppelfeld durch den anderen der beiden Prozessoren ebenfalls samt zugeordnetem anderem Zentralkoppelfeld (K) noch während zunächst weiterlaufendem Betrieb des ersteren mit Hilfe

erstens von Datenverbindungen, die von dem anderen zentralen Prozessor (ZW) über das ihm zugeordnete Zentral-Koppelfeld zu den dezentralen Steuereinrichtungen (GP1,GP2) aller ersten Anschlußgruppen (LTG) in betriebsbereiten Zustand gebracht werden, und

zweitens von Verbindungsdaten, die bezüglich aller über das noch in Betrieb befindliche Zentralkoppelfeld (K) und über die Teilkoppelfelder (GS1,GS2) der jeweils zweiten Anschlußgrup-pen (LTG) bestehender individueller Verbin-dungen angeben, welcher außenseitige Teil-koppelfeldanschluß mit welchem seinesglei-chen oder welche beiden außenseitigen Teil-koppelfeldanschlüsse mit welchen beiden Zen-tralkoppelfeldanschlüssen und welcher Zentral-koppelfeldanschluß mit seinesgleichen verbun-den ist, und die in den dezentralen Steuereinrichtungen (GP1,GP2) der jeweils zweiten Anschlußgruppen (LTG) gespeichert sind, und die pro Anschlußgruppen-Paar aufgrund eines von der dezentralen Steuereinrichtung der jeweils ersten Anschlußgruppe (LTG) an die Steuereinrichtung (GP) der jeweils zweiten Anschlußgruppe abgegebenen Anforderungssignales über dezentrale, den Anschlußgruppen-Paaren jeweils individuelle Übertragungswege (GL1/2) jeweils von der letztgenannten Steuereinrichtung (GP) an die erstgenannte Steuereinrichtung übertragen und hier gespeichert (GR) werden, und die anschließend aus jeder von diesen durch den anderen zentralen Prozessor (ZW) abgerufen werden, und

drittens von Verbindungen, die letzterer anhand dieser durch ihn abgerufenen Verbindungsdaten über sein Zentralkopppelfeld (K) und die Teilkoppelfelder (GS) der jeweils ersten Anschlußgruppen aufbaut,

vorbereitet wird,

und daß die Umschaltung aller Anschlußeinheiten von den Teilkoppelfeldern aller ersten Anschlußgruppen zu denen aller zweiten Anschlußgruppen in Abhängigkeit von der Durchführung der letzteren Verbindungsaufbauvorgänge erfolgt.

2. Schaltungsanordnung nach Anspruch 1, **dadurch gekennzeichnet,** daß nach Herstellung der Datenverbindungen durch den anderen zentralen Prozessor zu den dezentralen Steuereinrichtungen ersterer an letztere die für deren Betriebsbeginn erforderliche Programm und Vermittlungs-Software zur Speicherung in ihnen überträgt.

3. Schaltungsanordnung nach Anspruch 1, **dadurch gekennzeichnet,** daß während der Übertragung der Verbin-dungsdaten von den dezentralen Steuereinrich-tungen der zweiten Anschlußgruppen zu denen der ersten Anschlußgruppen und während der anhand dieser Daten erfolgenden Herstellung der Verbindungen eine Herstellung von durch rufende Teilnehmer gewählten Verbindungen verhindert ist, insbesondere, daß auch eine Herstellung von Verbindungen von im Anrufzustand sich befindenden Teilnehmerstellen oder Teilverbindungen zu verbindungsindividuellen Schalteinrichtungen, z.B. Wahlempfangssätzen, verhindert ist.

**Claims**

1. Circuit arrangement for centrally controlled telecommunication exchanges, especially PCM time-division-multiplex telephone exchanges, in which a central switching network (K1, K2) used for switching through connections, and a central processor (ZW1, ZW2) used inter alia for controlling the former and for processing switching signals required for this purpose is provided in duplicate for standby operation, and in which exchanges a plurality of local line trunk groups (LTG) is equipped with one group switch (GS) each for the external connection of junction and/or subscriber lines and with one local group processor (GP) each for receiving switching signals from these lines, for switching signal preprocessing and for forwarding switching signals to the central processor (ZW1, ZW2) and for sending out switching signals on these lines, and in which in each of these line trunk groups (LTG), the respective group switch (GS) is connected internally via two groups of links (L1, L2), separated into groups, to switching network connections, on the one hand, of one and, on the other hand, of the other one of the two central switching networks provided in parallel, and in which, for a data interchange used for the above switching signal handling, between the local group processors (GP), on the one hand, and the respective operationally ready processor, on the other hand, data connections are in each case brought into operationally ready status, or are held in it, for each local group processor, from the former processor via its associated switching network to the local group processors (GP), and in which the line trunk groups (LTG) are in each case associated with one another in pairs of twos, and in which within each of the latter, interface units (DIU), for example subscriber line circuits, multiple subscriber line circuits, (multiple) link termination circuits and the like, which are used for the external connection of subscriber and/or junction lines and are primarily connected within the respective line trunk group to its group switch, can be switched over in a manner by means of which the interface units (DIU) of in each case a first one of these two line trunk groups (LTG) are additionally connected to the group switch (GS) of the respective other one, that is to say of a respective second line trunk group (LTG), whereupon the corresponding switching signal processing and group switch setting for the connections to be switched through via the switched-over interface units (DIU) is also carried out by the local group processor of the other, that is to say second line trunk group, characterised in that a switching to standby mode, to be effected by the switching over of line trunk groups (LTG) associated with one another within each one of these pairs, of one of the two central processors (ZW1, ZW2) and the associated central switching network by the other one of the two processors, also with the associated other central switching network (K) whilst operation of the first one still continues for the time being, is prepared with the aid, firstly of data connections which are brought into operationally ready status by the other central processor (ZW) via its associated central switching network to the local group processors (GP1, GP2) of all first line trunk groups (LTG), and secondly, of connecting data which specify, with respect to all individual connections existing via the central switching network (K) still in operation and via the group switches (GS1, GS2) of the respective second line trunk groups (LTG), which external group switch connection is connected to whichever of its own type or which two external group switch connections are connected to whichever two central switching network connections and which central switching network connection is connected to its own type, and which are stored in the local group processors (GP1, GP2) of the respective second line trunk groups (LTG), and which are transmitted per line trunk group pair, due to a request signal output by the local group processor of the respective first line trunk group (LTG) to the group processor (GP) of the respective second line trunk group via local transmission paths (GS1/2), in each case individual to the line trunk group pairs, in each case from the last-mentioned group processor (GP) to the first-mentioned group processor and are here stored (GR), and which are subsequently called up from each one of these by the other central processor (ZW) and thirdly, of connections which the latter establishes by means of these connection data called up by it via its central switching network (K) and the group switches (GS) of the respective first line trunk groups, and in that the switching-over of all interface units from the group switches of all first line trunk groups to those of all second line trunk groups occurs in dependence on the execution of the latter connection setting-up processes.

2. Circuit arrangement according to Claim 1, characterised in that after the data connections have been established by the other central processor to the local processors, the former transmits to the latter the program and switching software required for the start of operation of the latter, for storage in them.

3. Circuit arrangement according to Claim 1, characterised in that during the transmission of the connection data from the local processors of the second line trunk groups to those of the first line trunk groups and during the establishment of the connections taking place by means of these data, an establishment of connections dialled by calling subscribers is prevented, especially in that an establishment of connections from subscriber stations which are in the calling state or partial connections to connection-individual switching devices, for example digit input circuits, is prevented.

**Revendications**

1. Montage pour des centraux de télécommunications à commande centrale, notamment des centraux téléphoniques MIC à multiplexage temporel, dans lesquels un champ de couplage central (K1,K2), qui est utilisé pour l'interconnexion directe des liaisons, ainsi qu'un processeur central (ZW1, ZW2), qui est utilisé notamment pour la commande du champ de couplage et pour le traitement, nécessaire à cet effet, d'indicatifs de commutation, sont prévus en double de manière à permettre une possibilité de remplacement (fonctionnement en stand-by), et dans lesquels une multiplicité de modules décentralisés de raccordement (LTG) sont équipés respectivement d'un champ de couplage partiel (GS) pour leur raccordement, côté extérieur, de lignes de jonction et/ou de lignes d'abonnés, et respectivement d'un dispositif décentralisé de commande (GP) pour la réception d'indicatifs de commutation par ces lignes, pour le prétraitement de l'indicatif de commutation ainsi que pour la retransmission d'indicatifs de commutation au processeur central (ZW1,ZW2) et pour l'envoi d'indicatifs de commutation à ces lignes, et dans lesquels, dans chacun de ces modules de raccordement (LTG), le champ de couplage partiel respectif (GS) est raccordé, côté intérieur, par l'intermédiaire de deux groupes de lignes de liaison (L1,L2), séparément par groupes, à des bornes d'une part de l'un et d'autre part de l'autre des deux champs de couplage centraux prévus en parallèle, et dans lesquels pour un échange de données, utilisées pour le traitement d'indicatifs de commutation indiqué plus haut, entre les dispositifs décentralisés de commande (GP) d'une part et le processeur respectivement prêt pour l'utilisation d'autre part, de transmission de données, prévues respectivement pour chaque dispositif décentralisé de commande de chaque processeur, établies par l'intermédiaire du champ de couplage, qui lui est associé, et aboutissant aux dispositifs décentralisés de commande (GP) sont placées dans l'état prêt à fonctionner ou sont maintenues dans cet état, et dans lesquels les modules de raccordement (LTG) sont associés par couples, et dans lesquels, dans chacun de ces modules de raccordement, des unités de raccordement (DIU), par exemple des circuits de raccordement d'abonnés, des circuits de raccordement d'abonnés multiples, des circuits de terminaison (multiples) de lignes de jonction et analogues, qui sont utilisés pour le raccordement, côté extérieur, de lignes d'abonnés et/ou de lignes de jonction et sont raccordés, à l'intérieur du module respectif de raccordement, principalement au champ de couplage partiel de ce module, peuvent être commutées d'une manière telle que les unités de raccordement (DIU) appartenant respectivement à un premier de ces deux modules de raccordement (LTG) sont raccordées en supplément au champ de couplage partiel (GS) de l'autre module respectif de raccordement, c'est-à-dire d'un second module respectif de raccordement (DIU), à la suite de quoi le traitement correspondant des indicatifs de commutation ainsi que le réglage des champs de couplage partiels également du dispositif décentralisé de commande de l'autre, c'est-à-dire du second module de raccordement sont exécutés, pour les liaisons devant être interconnectées par l'intermédiaire des unités de raccordement commutées (DIU), caractérisé par le fait qu'un remplacement, qui doit être réalisé dans chacun de ces couples de modules de raccordement (LTG) associés entre eux, de l'un des deux processeurs centraux (ZW1, ZW2) y compris le champ de couplage central associé, par l'autre des deux processeurs y compris également l'autre champ de couplage central associé (k), est préparé encore pendant le fonctionnement, qui tout d'abord se poursuit, du premier processeur, à l'aide

en premier lieu, de liaisons de données, qui sont amenées dans l'état prêt à fonctionner depuis l'autre processeur central (ZW), par l'intermédiaire du champ de couplage central qui lui est associé, aux dispositifs décentralisés de commande (GP1,GP2) de tous les premiers modules de raccordement (LTG), et

en second lieu, de données de liaison, qui indiquent, en ce qui concerne toutes les liaisons individuelles passant par le champ de couplage central (k) encore en fonctionnement et par les champs de couplage partiels (GS1,GS2) des seconds modules respectifs de raccordement (LTG), quelle borne, située côté extérieur, du champ de couplage partiel, est raccordée à quelle borne de champ de couplage partiel, qui lui correspond, ou quelles deux bornes, côté extérieur, du champ de couplage partiel sont raccordées à quelles deux bornes du champ de couplage central et quelle borne du champ de couplage central est raccordée à une borne du champ de couplage central, qui lui correspond, et qui sont mémorisées dans les dispositifs décentralisés de commande (GP1,GP2) des seconds modules respectifs de raccordement (LTG), et qui, pour chaque couple de modules de raccordement et sur la base d'un signal de demande envoyé par le dispositif décentralisé de commande du premier module respectif de raccordement (LTG) au dispositif de commande (GP) du second module respectif de raccordement, sont transmises par l'intermédiaire de voies décentralisées de transmission GL1/2, prévues respectivement pour les couples de modules de raccordement, respectivement par le dispositif de commande (GP) indiqué en dernier lieu au dispositif de commande indiqué en premier et y sont mémorisées (GR), et qui sont appelées ensuite à partir de chacun de ces dispositifs, par l'autre processeur central (ZW), et

en troisième lieu, de liaisons, que le processeur indiqué en dernier lieu établit, sur la base de ces données de liaison qu'il a appelées, par l'intermédiaire de son champ de couplage central (k) et des champs de couplage partiels (GS) du premier module respectif de raccordement,

et que la commutation de toutes les unités de raccordement depuis les champs de couplage partiels de tous les premiers modules de raccordement aux champs de couplage partiels de tous les seconds modules de raccordement s'effectue en fonction de l'exécution des dernières opérations d'établissement de liaisons.

2. Montage suivant la revendication 1, caractérisé par le fait qu'après l'établissement des liaisons de transmission de données par l'autre processeur central en direction des dispositifs décentralisés de commande, le processeur transmet à ces dispositifs de commande, pour qu'ils les mémorisent, le programme et le logiciel de commutation nécessaires pour le début du fonctionnement de ces dispositifs.

3. Montage suivant la revendication 1, caractérisé par le fait que pendant la transmission des données de liaison depuis les dispositifs centralisés de commande du second module de raccordement à ceux du premier module de raccordement et pendant l'établissement des liaisons, qui s'effectue sur la base de ces données, l'établissement de liaisons sélectionnées par des abonnés appelants est empêché, et que notamment même l'établissement de liaisons de postes d'abonnés, qui sont dans l'état d'appel, ou de liaisons partielles vers des dispositifs de commutation prévus individuellement pour chaque liaison, par exemple des jeux d'organes de réception de sélection, est empêchée.

# FIG 1

# FIG 2